# EUROPÄISCHE PATENTSCHRIFT

(11) **EP 1 010 387 B1**
(45) Veröffentlichungstag und Bekanntmachung des Hinweises auf die Patenterteilung: **19.01.2011**
(21) Anmeldenummer: 99123052.5
(22) Anmeldetag: 20.11.1999
(51) Int. Cl.: A47L 9/20

(54) **Filtervorrichtung mit Rüttler**
Filtering device with vibrator
Dispositif de filtration muni d'un trembleur

(30) Priorität: 16.12.1998 DE 29822388 U
(43) Veröffentlichungstag der Anmeldung: 21.06.2000
(73) Patentinhaber: Electrostar Schöttle GmbH & Co., D-73262 Reichenbach (DE)
(72) Erfinder: Steckhan, Markus Dipl.-Ing., 73730 Esslingen (DE); Bruntner, Eugen, 73278 Schlierbach (DE)
(74) Vertreter: Kohler Schmid Möbus

(56) Entgegenhaltungen:
- EP-A- 0 245 224
- DE-U- 9 204 188
- GB-A- 2 072 528
- US-A- 4 787 923
- PATENT ABSTRACTS OF JAPAN vol. 017, no. 547 (C-1116), 4. Oktober 1993 (1993-10-04) & JP 05 154320 A (TOYOTA AUTOM LOOM WORKS LTD), 22. Juni 1993 (1993-06-22)

## Beschreibung

Bei Staubabsaugeinrichtungen ist es bereits bekannt, die Filtervorrichtung mit einem Rüttler zu versehen, um bei zu großer Schmutzbelastung des Filters diesen durch Rütteln weitgehend vom Schmutz zu befreien, so daß wieder die volle Saugwirkung der Staubabsaugeinrichtung erreicht wird.

Eine gattungsgemäße Filtervorrichtung mit Rüttler ist in der US 4,787,923 beschrieben. Dabei ist ein einerseits an einer Rüttelplatte anliegender Filter andererseits in einem Gehäuse gelagert. Der Filter ist dabei als ein quaderförmiges Filterelement ausgebildet. Dieses Filterelement ist auf einer Lagerungskante des Gehäuses gelagert, die um den gesamten Filter herum verläuft. Gegen das Gehäuse ist der Filter mit einer Dichtung aus einem Schaumstoffstreifen abgedichtet. Die Beweglichkeit des Filters beim Rütteln, also dessen Rüttelhub, ist durch die Ausführungsform der Dichtung eingeschränkt.

Um auf einfache Weise einen besonders hohen Wirkungsgrad beim Rütteln zu erreichen, ist erfindungsgemäß der einerseits an einer Rüttelplatte an- bzw. aufliegende Filter andererseits in einem Gehäuse verschiebbar gelagert, wobei der Filter an einer ringförmigen Gehäusewand über eine Gleit-, Rolldichtung oder dergleichen anliegt und als Zylinder ausgebildet ist. Auf diese Weise wird beim Rütteln ein relativ großer Hub erreicht und dadurch der Wirkungsgrad erhöht. Vorzugsweise besteht die Rolldichtung aus einem in einem zur Gehäusewand offenen Käfig gelagerten Rollkörper. Bei der Hubbewegung wird dann die Rolldichtung jeweils in beiden Richtungen mitgenommen, ohne daß der Kontakt zur Gehäusewand verloren geht.

Nach einem weiteren Merkmal der Erfindung stützt sich der als Zylinder ausgebildete Filter auf einem mit einer Rüttelplatte verbundenen Filterkorb ab. Dabei ist die Rüttelplatte oder ein mit ihr verbundenes Teil gegenüber einem oder mehreren Elektromagneten federnd abgestützt. Die Magnete werden nun mit einer entsprechenden Frequenz angesteuert, so daß die Rüttelplatte in entsprechenden Abständen durch die Magnete angezogen bzw. durch die Federn wiederum abgedrückt wird. Da die Rüttelplatte ebenso wie der Filterkorb zweckmäßig aus Kunststoff gefertigt sind, weist die Rüttelplatte ein oder mehrere mit den Elektromagneten zusammenwirkende Metallplatten auf.

Üblicherweise erfolgte bisher die Ansteuerung der Elektromagnete auf der Basis von Halbwellengleichrichtung. Um die Abrüttelergebnisse noch weiter zu verbessern und unabhängig vom Volumen der Verschmutzung zu machen, erfolgt nunmehr eine Vollwellenansteuerung in Impulstechnik. Durch die kurzen Impulspakete auf dem Filter ist es möglich, die Abreinigung wesentlich zu optimieren, da bei jedem Klopfvorgang die komplette Wegstrecke und so die maximale Beschleunigung auf den Filter gegeben werden kann.

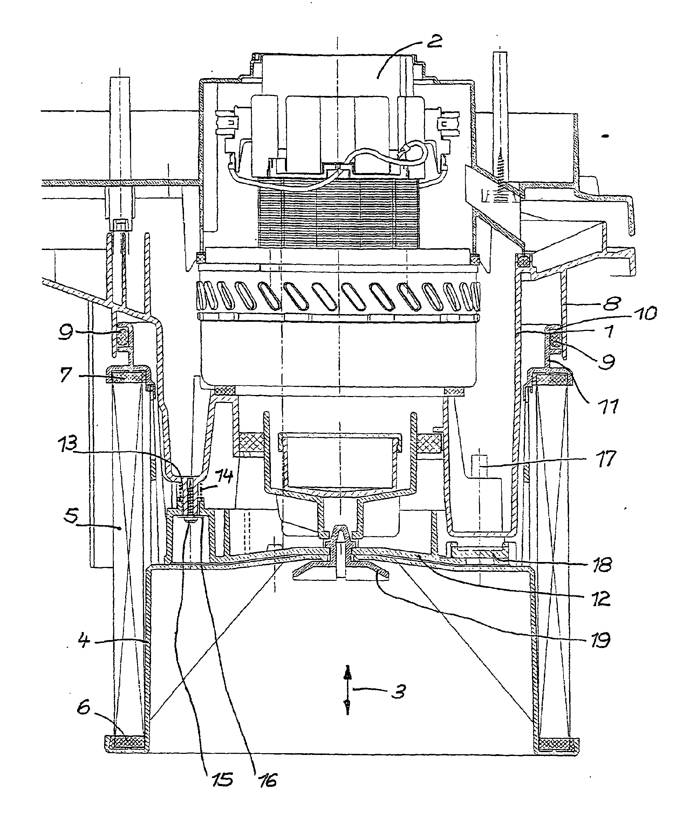

Die Zeichnung zeigt ein Ausführungsbeispiel der Erfindung und zwar einen abgebrochenen Querschnitt durch eine Staubabsaugvorrichtung.

Im Motorgehäuse 1 ist ein Lüftermotor 2 gelagert. An das Gehäuse 1 schließt sich ein in Pfeilrichtung 3 verschiebbar gelagerter aus Kunststoff bestehender Filterkorb 4 an. Dieser weist im Abstand voneinander im Querschnitt etwa U-förmige Ringkörper 6 und 7 auf, in welchen der eigentliche Filter 5 gelagert ist. Vom Gehäuse 1 erstreckt sich zum Filter 5 eine ringförmige Gehäusewand 8. An dieser liegt eine Rolldichtung 9 an, welche in einem zur Wand 8 hin offenen Käfig 10 gelagert ist, der seinerseits über den Steg 11 mit dem Filterkorb 4 verbunden ist. Auf diese Weise wird eine relativ große Hubbewegung des Filterkorbes 4 zusammen mit dem Filter 5 möglich, wobei durch die Rolldichtung 9 eine einwandfreie Abdichtung erfolgt.

Am Gehäuse 1 ist eine Rüttelplatte 12 längs verschiebbar auf dem Zapfen 13 gelagert. Dabei stützt sich die Rüttelplatte 12 gegenüber dem Gehäuse 1 durch Federn 14 ab, wobei die durch eine Schraube 15 gehaltene Scheibe 16 als Anschlag dient. Das Gehäuse 1 weist ferner Elektromagnete 17 auf, welche mit ihnen gegenüberliegenden Metallplatten 18 zusammenwirken, welche auf der Rüttelplatte 12 befestigt sind. Der Filterkorb 4 ist seinerseits an der Rüttelplatte 12 durch ein Verbindungsglied 19 befestigt. Bei entsprechender Ansteuerung der Elektromagnete 17 werden die Metallplatten 18 und damit die Rüttelplatte 12 angezogen und anschließend durch die Federn 14 wiederum abgestoßen, so daß sich eine Hubbewegung des Filterkorbes 4 und damit des Filters 5 ergibt. Durch die Rolldichtungen 9 wird eine besondere Leichtgängigkeit des Filters erreicht, wodurch die Reinigungswirkung erheblich gesteigert wird.

## Patentansprüche

1. Filtervorrichtung mit Rüttler, wobei ein einerseits an einer Rüttelplatte (12) an- und/oder aufliegender Filter (5) sich auf einem mit der Rüttelplatte (12) verbundenen Filterkorb (4) abstützt, **dadurch gekennzeichnet, daß** der Filter (5) andererseits in einem Gehäuse (8) verschiebbar gelagert und als Zylinder ausgebildet ist, wobei der Filter (5) an einer ringförmigen Gehäusewand des Gehäuses(8) über eine Rolldichtung (9) anliegt.

2. Filtervorrichtung nach Anspruch 1, **dadurch gekennzeichnet, daß** die Rolldichtung (9) aus einem in einem zur Gehäusewand (8) offenen Käfig (10) gelagerten Rollkörper besteht.

3. Filtervorrichtung nach Anspruch 1, **dadurch gekennzeichnet, daß** die Rüttelplatte (12) oder ein mit ihr verbundenes Teil (18) gegenüber einem oder mehreren Elektromagneten (17) federnd (14) abgestützt ist.

4. Filtervorrichtung nach Anspruch 3, **dadurch gekennzeichnet, daß** die Rüttelplatte (12) eine oder mehrere mit den Elektromagneten (17) zusammenwirkende Metallplatten (18) aufweist.

5. Filtervorrichtung nach Anspruch 3 oder 4, **dadurch gekennzeichnet, daß** die Elektromagnete (17) mit einer Elektronik zur Vollwellensteuerung in Impulstechnik verbunden sind.

## Claims

1. Filtering device with vibrator, wherein a filter (5) which abuts or is supported on a vibrating plate (12) is supported on a filter basket (4) which is connected to the vibrating plate (12), **characterized in that** the filter (5) is displaceably disposed in a housing (8) and has the shape of a cylinder, wherein the filter (5) abuts an annular housing wall of the housing (8) via a rolling seal (9).

2. Filtering device according to claim 1, **characterized in that** the rolling seal (9) consists of a rolling element which is mounted in a cage (10) which is open towards the housing wall (8).

3. Filtering device according to claim 1, **characterized in that** the vibrating plate (12) or a part (18) connected thereto is resiliently supported with respect to one or more electromagnets (17).

4. Filtering device according to claim 3, **characterized in that** the vibrating plate (12) has one or more metal plates (18) which cooperate with the electromagnets (17).

5. Filtering device according to claim 3 or 4, **characterized in that** the electromagnets (17) are connected to an electronics for full-wave control using pulse technique.

## Revendications

1. Dispositif de filtration muni d'un vibreur, dans lequel un filtre (5), appliqué et/ou reposant d'un côté sur une plaque vibrante (12), s'appuie sur un panier filtrant (4) relié à la plaque vibrante (12), **caractérisé en ce que** le filtre (5) est monté de l'autre côté de manière à pouvoir coulisser dans un boîtier (8) et réalisé sous forme de cylindre, le filtre (5) étant appliqué sur une paroi de boîtier annulaire du boîtier (8) par l'intermédiaire d'un joint roulant (9).

2. Dispositif de filtration selon la revendication 1, **caractérisé en ce que** le joint roulant (9) est composé d'un corps roulant monté dans une cage (10) ouverte vers la paroi de boîtier (8).

3. Dispositif de filtration selon la revendication 1, **caractérisé en ce que** la plaque vibrante (12) ou une pièce (18) reliée à celle-ci est supportée élastiquement par rapport à un ou plusieurs électroaimants (17).

4. Dispositif de filtration selon la revendication 3, **caractérisé en ce que** la plaque vibrante (12) présente une ou plusieurs plaques métalliques (18) coopérant avec les électroaimants (17).

5. Dispositif de filtration selon la revendication 3 ou 4, **caractérisé en ce que** les électroaimants (17) sont reliés à une électronique de commande pleine onde en technique impulsionnelle.
